# EUROPÄISCHE PATENTANMELDUNG

(11) **EP 2 594 619 A1**
(43) Veröffentlichungstag der Anmeldung: **22.05.2013**
(21) Anmeldenummer: 12007287.1
(22) Anmeldetag: 23.10.2012
(51) Int. Cl.: C09J 193/02, C09J 9/02, B29C 65/48

(54) **Ethanollöslicher, elektrisch leitender Kleber**

(30) Priorität: 16.11.2011 DE 102011118720
(71) Anmelder: Admedes Schuessler GmbH, 75179 Pforzheim (DE)
(72) Erfinder: Hegel, Alexander, 76187 Karlsruhe (DE)
(74) Vertreter: Müller-Boré & Partner Patentanwälte

(57) **Zusammenfassung**

Die vorliegende Erfindung betrifft einen ethanollöslichen, elektrisch leitenden Kleber bzw. Haftmittel und ein Verfahren zur Herstellung des erfindungsgemäßen Klebers bzw. Haftmittels. Ferner betrifft die vorliegende Erfindung Verfahren zur Verklebung zweier Bauteile, welche den erfindungsgemäßen Kleber bzw. Haftmittel verwenden, und Verfahren zum Lösen zweier Bauteile, die durch das erfindungsgemäße Verfahren zur Verklebung verklebt wurden. Schließlich betrifft die vorliegende Erfindung die Verwendung des erfindungsgemäßen Klebers bzw. Haftmittels zur reversiblen Verklebung zweier Bauteile.

## Beschreibung

Die vorliegende Erfindung betrifft einen ethanollöslichen, elektrisch leitenden Kleber bzw. Haftmittel und ein Verfahren zur Herstellung des erfindungsgemäßen Klebers bzw. Haftmittels. Ferner betrifft die vorliegende Erfindung Verfahren zur Verklebung zweier Bauteile, welche den erfindungsgemäßen Kleber bzw. Haftmittel verwenden, und Verfahren zum Lösen zweier Bauteile, die durch das erfindungsgemäße Verfahren zur Verklebung verklebt wurden. Schließlich betrifft die vorliegende Erfindung die Verwendung des erfindungsgemäßen Klebers bzw. Haftmittels zur reversiblen Verklebung zweier Bauteile.

Für die Herstellung von Dünnfilmen mit dem MCM-Prozess (Micro Chemical Machining, auch bekannt als Electro Chemical Machining) wird eine Fixierung für Flachmaterialien, vorzugsweise Bleche benötigt, mit der sich das Flachmaterial sehr gut haftend an den Untergrund binden lässt, wobei elektrische Leitfähigkeit gegeben sein soll. Die meisten auf dem Markt verfügbaren "Leitkleber" basieren auf einem Epoxyharz, das mit elektrisch leitenden Metallpartikeln, meist Silber, gefüllt ist. Derartige Epoxy/Silber-Leitkleber zeigen jedoch den gravierenden Nachteil, dass die Klebung nicht mehr, beziehungsweise nur unter Einsatz von sehr giftigen Chemikalien lösbar ist. Auch ein Reinigen mittels Ultraschall vermag es meist nicht, die Restpartikel des Epoxy/Silber-Leitklebers vollständig zu entfernen.

Aufgrund der genannten Nachteile der Epoxy/Silber-Leitkleber liegt der vorliegenden Erfindung somit die Aufgabe zugrunde, einen löslichen, elektrisch leitenden Kleber bereitzustellen, mit dem Flachmaterialien vollflächig und elektrisch leitend (niederohmig) mit einem Untergrund verbunden werden können, wobei die Verbindung so gut haftet, dass selbst freigelegte Inseln mechanisch und elektrisch mit dem Untergrund verbunden sind. Dadurch soll ein "Flattern", also das Schwingen des ausgedünnten Bereichs verhindert werden. Desweiteren muss der Kleber so beschaffen sein, dass nach der Bearbeitung die bearbeiteten Flachmaterialien vom Untergrund ohne Einsatz von giftigen Chemikalien lösbar sind.

Diese Aufgabe wird durch die in den Ansprüchen gekennzeichneten Ausführungsformen der vorliegenden Erfindung gelöst.

Insbesondere wird erfindungsgemäß ein ethanollöslicher, elektrisch leitender Kleber bzw. Haftmittel bereitgestellt, wobei der Kleber bzw. das Haftmittel Schellack, elektrisch leitende Metallpartikel und Ethanol umfasst.

Der Begriff "elektrisch leitend" bedeutet erfindungsgemäß, dass der Kleber niederohmig ist, d.h. einen Volumenwiderstand von vorzugsweise 0,005 bis 0,05 Ω·cm aufweist.

Der Begriff "Schellack" bezieht sich auf eine harzige Substanz, die aus Gummilack gewonnen wird, welcher wiederum aus Ausscheidungen der Lackschildlaus gewonnen wird. Schellack ist ein hartes, zähes Harz mit einer durchschnittlichen Molmasse von ca. 1000 g/mol, das im Rohzustand noch Wachs enthält. Da der besagt Wachsanteil unlöslich in Ethanol ist, wird erfindungsgemäß gereinigter Schellack eingesetzt, der gebleicht und ohne Wachs ist. Derartiger Schellack ist löslich in Ethanol und unlöslich in Wasser, wird bei Wärmezufuhr (bei ca. 60 bis 80 °C) pastös und ist kommerziell als Chips/Flakes erhältlich.

Der Begriff "elektrisch leitende Metallpartikel" unterliegt erfindungsgemäß keiner Einschränkung. Es können sowohl Partikel eines Metalls, als auch Gemische mehrerer Metalle verwendet werden. Die Größe der Metallpartikel unterliegt erfindungsgemäß keiner Einschränkung. Gemäß einer bevorzugten Ausführungsform umfassen die Metallpartikel Silber. Gemäß einer besonders bevorzugten Ausführungsform sind die elektrisch leitenden Metallpartikel Silber-Flakes mit einer Größe < 16 pm, die kommerziell erhältlich sind. Derartige Silber-Flakes haben eine sehr große Oberfläche im Verhältnis zu ihrem Volumen, wodurch vorteilhafterweise ein Kontakt zwischen den Flakes wahrscheinlicher ist als bei Metallpulvern mit kugelförmigen Partikeln. Der Silberanteil der bevorzugten Silber-Flakes beträgt vorzugsweise 99,5% oder mehr.

Gemäß einer bevorzugten Ausführungsform der vorliegenden Erfindung wird Ethanol in einer Reinheit von mindestens 99%, noch bevorzugter von mindestens 99,8% verwendet.

Die Viskosität des Klebers wird durch das Mischungsverhältnis Schellack zu Ethanol eingestellt. Je nach Anwendung sind andere Mischungsverhältnisse bevorzugt, wobei je höher der Lösungsmittelanteil ist, desto dünner wird die spätere Klebeschicht ausgeprägt. Gemäß einer bevorzugten Ausführungsform besteht das Gemisch aus 25% bis 50% Schellack bezogen auf das Gewicht des Ethanols. Die Menge der elektrisch leitenden Metallpartikel im erfindungsgemäßen Kleber entspricht vorzugsweise mindestens 50% bezogen auf das Gewicht der Schellacklösung.

Desweiteren wird erfindungsgemäß ein Verfahren zur Herstellung des erfindungsgemäßen Klebers bzw. Haftmittels bereitgestellt, welches Lösen von Schellack in Ethanol und Hinzufügen der elektrisch leitenden Metallpartikel, vorzugsweise Silber-Flakes, zur Bildung einer Suspension umfasst.

Erfindungsgemäß wird zuerst Schellack in Ethanol, vorzugsweise Ethanol mit einer Reinheit von mindestens 99%, gelöst, wobei die gewünschte Viskosität des Klebers wie vorstehend beschrieben eingestellt werden kann. Das Lösen des Schellacks unterliegt erfindungsgemäß keiner Einschränkung. Das Lösen kann z.B. sowohl bei Raumtemperatur als auch bei erhöhter Temperatur durchgeführt werden, solange die Temperatur nicht so hoch ist, dass Ethanol verdampft. Das Lösen des Schellacks kann dabei durch mechanisches Rühren jeglicher Art unterstützt werden. Anschließend werden dieser Lösung elektrisch leitende Metallpartikel untergemischt, vorzugsweise in einem Verhältnis von 1:1 von Schellacklösung zu Metallpartikeln. Da die Metallpartikel in Ethanol unlöslich sind, entsteht eine Suspension, die als Lösungsmittel- oder Thermischer-Kleber eingesetzt werden kann.

Ein weiterer Aspekt der vorliegenden Erfindung betrifft ein Verfahren zum Verkleben zweier Bauteile, umfassend die Schritte:
(a1) Auftragen des erfindungsgemäßen Klebers auf die zu verklebende Oberfläche mindestens eines Bauteiles, wobei die Bauteile ein Flachmaterial und ein Untergrund sind;
(b1) Aufbringen des einen Bauteils auf das andere Bauteil, wobei die zu verklebenden Oberflächen der beiden Bauteile, von denen mindestens eine Oberfläche im Schritt (a1) mit Kleber versehen wurde, miteinander in Kontakt gebracht werden;
(c1) Verpressen der beiden Bauteile; und
(d1) Verdampfen des Ethanols unter dem bestehenden Druck.

Bei dieser Ausführungsform des erfindungsgemäßen Verfahrens wird der erfindungsgemäße Kleber als Lösungsmittel-Kleber eingesetzt.

Erfindungsgemäß handelt es sich bei den zu verklebenden Bauteilen um ein Flachmaterial und einen Untergrund. Gemäß einer bevorzugten Ausführungsform handelt es bei dem Flachmaterial um ein Blech. Die Größe und Dicke der Bauteile unterliegen erfindungsgemäß keiner Einschränkung. Gemäß einer bevorzugten Ausführungsform werden als Untergrund Metalle, wie zum Beispiel nichtrostender Edelstahl oder Aluminium, eingesetzt. Die zu verklebenden Flächen müssen erfindungsgemäß planparallel und eben sein und eine geringe Oberflächenrauhigkeit aufweisen. Eine zu hohe Oberflächenrauhigkeit und/oder Oberflächenunebenheit kann vor allem bei Verwendung von wenig Kleber zu einer ungenügenden Verklebung führen. Darum kann es sich als vorteilhaft erweisen, eine zu raue und/oder zu unebene Oberfläche gegebenenfalls vor Auftragen des Klebers speziell zu präparieren, zum Beispiel durch Ätzen oder Sandstrahlen, um so das Kleben, im Besonderen das Anhaften des Klebers, durch beispielsweise eine feine gleichmäßige Rauhigkeit positiv zu beeinflussen. Dadurch kann vorteilhafterweise gegebenenfalls auch bei Verwendung einer reduzierten Menge an Kleber eine starke und beständige Klebung realisiert werden.

Im Schritt (a1) des Verfahrens wird der erfindungsgemäße Kleber auf die zu verklebenden Oberflächen mindestens eines Bauteiles gleichmäßig aufgetragen. Gemäß einer bevorzugten Ausführungsform erfolgt die Auftragung auf beide Bauteile. Die Art der Auftragung unterliegt dabei keiner Einschränkung. Gemäß einer bevorzugten Ausführungsform des erfindungsgemäßen Verfahrens erfolgt die Auftragung automatisch mit Dosierdüsen oder Rakeln auf die Oberfläche der Bauteile. Gemäß einer besonders bevorzugten Ausführungsform erfolgt die Auftragung des Klebers mit einer Heizdüse analog zu einem Heissklebe-Verfahren. Alternativ kann das Auftragen wie bei einem Lack auch im Spritzverfahren oder Spin-Coating erfolgen. Die Menge des aufgetragenen Klebers unterliegt erfindungsgemäß keiner Einschränkung.

Im nachfolgenden Schritt (b1) werden die zu verklebenden Oberflächen der beiden Bauteile, auf mindestens einer von welchen der erfindungsgemäße Kleber im Schritt (a1) aufgetragen wurde, miteinander in Kontakt gebracht.

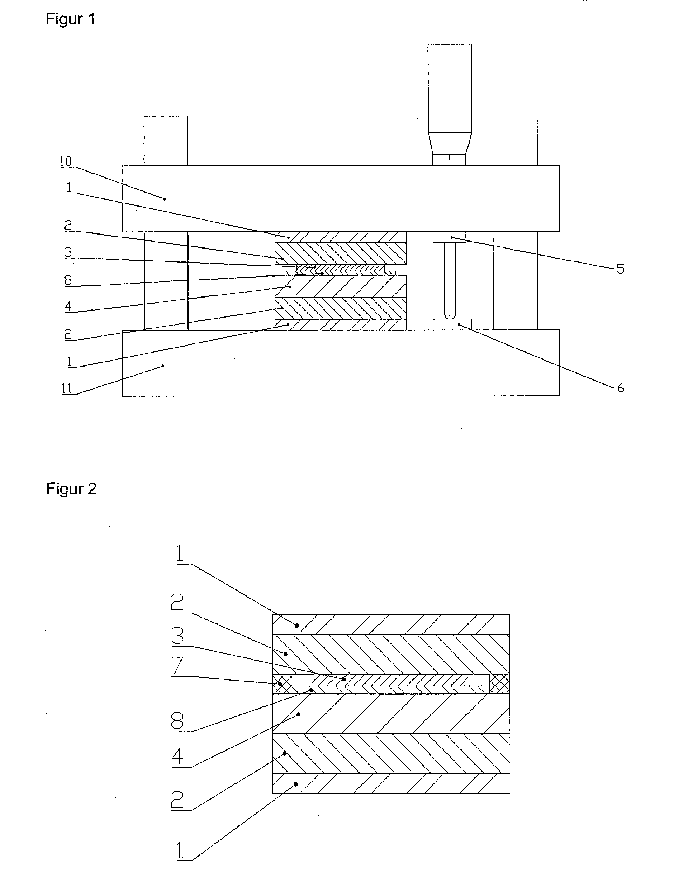

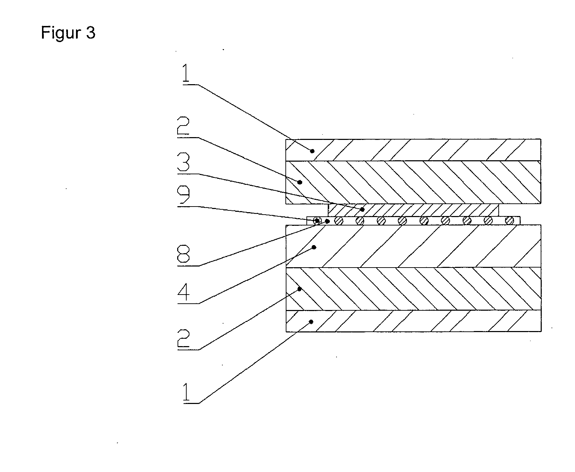

Im anschließenden Schritt (c1) werden die beiden Bauteile verpresst, d.h. zusammengedrückt, wobei der verwendete Druckbereich in Abhängigkeit zur zu verklebenden Fläche ausgewählt wird. Das Verpressen kann sowohl maschinell als auch von Hand erfolgen. Vorzugsweise wird das Verpressen in einer Presse mit einstellbarer Presskraft durchgeführt. Hierbei sind das Ober- und Unterwerkzeug 10, 11 der Presse planparallel ausgeführt, um eine gleichmäßige Klebeschicht zu bekommen. Eine schematische Ausführungsform einer derartigen Presse ist in Figur 1 dargestellt. Alternativ können sogenannte Spacer 7 auf das Unterwerkzeug 11 aufgebracht werden, die bei nichtgeführtem Oberwerkzeug 10 für eine gleichmäßige Klebeschicht sorgen (siehe Figur 2). Durch Zusatz von definierten Partikeln, zum Beispiel Mikro-Kugeln 9, in kleinen Mengen zum Schellack kann optional eine gleichmäßige Schichtstärke erreicht werden (siehe Figur 3).

Durch Verdampfen des Ethanols während der Verpressung der Bauteile härtet, beziehungsweise trocknet die Klebung im Schritt (d1) und die beiden Bauteile werden miteinander verbunden. Das Verdampfen des Ethanols kann sowohl bei Raumtemperatur als auch bei erhöhter Temperatur von maximal ca. 60 °C erfolgen. Bei Verdampfen des Ethanols bei Raumtemperatur hat sich gezeigt, dass die Trocknung sehr lange dauern kann und die Metallpartikel-Suspension durch das verdampfende Ethanol schwindet beziehungsweise sich entmischt. Dieser Effekt tritt besonderes bei großen Klebeflächen auf. Das beschriebene Verfahren, in dem der erfindungsgemäße Kleber als Lösungsmittel-Kleber eingesetzt wird, eignet sich jedoch vorteilhafterweise besonders, wenn wärmeempfindliche Bauteile miteinander verklebt werden sollen.

Gemäß einer alternativen Ausführungsform der vorliegenden Erfindung wird der erfindungsgemäße Kleber als Thermischer-Kleber zum Verkleben zweier Bauteile verwendet. Demzufolge stellt die vorliegende Erfindung ein alternatives Verfahren zum Verkleben zweier Bauteile bereit, umfassend die Schritte:
(a2) Auftragen des erfindungsgemäßen Klebers auf die zu verklebende Oberfläche mindestens eines Bauteils, wobei die Bauteile ein Flachmaterial und ein Untergrund sind;
(b2) Erwärmen des Bauteils oder der Bauteile, auf das/die der Kleber aufgetragen ist, zum Verdampfen des Ethanols;
(c2) Aufbringen des einen Bauteils auf das andere Bauteil, wobei die zu verklebenden Oberflächen der Bauteile, von denen mindestens eine Oberfläche im Schritt (a2) mit Kleber versehen wurde, miteinander in Kontakt gebracht werden;
(d2) Verpressen und Erwärmen der beiden Bauteile; und
(e2) Erkalten lassen der verbundenen Bauteile unter dem bestehenden Druck.

Die zu verklebenden Bauteile sind bereits obenstehend für das Verfahren, in dem der erfindungsgemäße Kleber als Lösungsmittel-Kleber verwendet wird, beschrieben und definiert.

Im ersten Schritt (a2) der erfindungsgemäßen Verfahrens, in dem der erfindungsgemäße Kleber als Thermischer-Kleber verwendet wird, wird der Kleber auf die zu verklebende Oberfläche mindestens eines Bauteils aufgetragen. Die Auftragung kann dabei wie im obenstehenden Schritt (a1) definiert durchgeführt werden. Dabei kann das Auftragen auch mit einem Spin-Coating-Verfahren erfolgen.

In diesem Fall sind auch sehr dünne Klebeschichten im Bereich von 5 µm bis 50 µm möglich, wobei sich die Schichtstärke über die Viskosität des Klebers und die Anzahl der Durchgänge einstellen lässt. Während der für Spin-Coating verwendete Kleber vorzugsweise eher niederviskos angemischt wird, wird zur Auftragung mit Rakeln vorzugsweise hochviskoser Kleber verwendet. Eine weitere mögliche Form der Auftragung stellt eine Auftragung mittels Pulverbeschichten dar. Hierbei wird der erfindungsgemäße Kleber, d.h. die Schellack, elektrisch leitende Metallpartikel und Ethanol umfassende Suspension, die für eine gute Durchmischung der Bestandteile sorgt, vor der Auftragung getrocknet, d.h. vom Lösungsmittel befreit, und zu einem feinen Pulver gemahlen. Das derartig erhaltene Pulver kann dann auf die Oberfläche des Bauteils vorteilhafterweise einfach und gleichmäßig aufgetragen werden. Zudem besteht keine Gefahr, dass sich die Suspension vor Anwendung entmischt oder die Viskosität der Suspension sich durch verdampfendes Ethanol verändert.

Gemäß einer bevorzugten Ausführungsform der Erfindung wird nur auf die Oberfläche eines Bauteils Kleber aufgetragen, wohingegen die Oberfläche des anderen Bauteils unbehandelt verbleibt. Dies wird vorzugsweise dann derart ausgeführt, wenn sich ein Bauteil, zum Beispiel ein massiver Metallklotz, leichter beschichten lässt als das andere Bauteil, zum Beispiel ein Blech von nur 50 µm Stärke.

Im Schritt (b2) des Verfahrens wird das Bauteil beziehungsweise die Bauteile, auf das/die der Kleber aufgetragen ist, erwärmt, wodurch das Ethanol des Klebers verdampft. Die Art der Erwärmung unterliegt erfindungsgemäß keiner Einschränkung. Gemäß einer bevorzugten Ausführungsform wird mit Hilfe einer Heizplatte oder eines Ofens erwärmt. Gemäß einer bevorzugten Ausführungsform wird auf einer Heizplatte oder in einem Ofen, zum Beispiel einem Warmluftofen, auf eine Temperatur bis 60 °C erwärmt und die Temperatur für 1 h bis 2h gehalten, da bei dieser Temperatur Ethanol in einer geeigneten Geschwindigkeit verdampft, um eine reine, nur aus Schellack bestehende Klebeschicht zu erhalten.

Im nachfolgenden Schritt (c2) werden die zu verklebenden Oberflächen der beiden Bauteile, von denen mindestens eine Oberfläche im Schritt (a2) mit Kleber versehen wurde, miteinander in Kontakt gebracht.

In einem optionalen Schritt (b2') zwischen Schritt (b2) und (c2) lässt man jedes Bauteil, das im Schritt (b2) erwärmt wurde, erkalten. Dadurch kann vorteilhafterweise die Beschädigung einer dünnen und weichen Klebeschicht beim Fügen der Bauteile vermieden werden. Das Erkaltenlassen kann dabei zum Beispiel durch Ausschalten der Wärmequelle erfolgen, wobei optional auch eine zusätzliche Kühlung aktiviert werden kann.

Im nachfolgenden Schritt (d2) werden die beiden Bauteile verpresst, d.h. zusammengedrückt, und erwärmt. Das Verpressen kann sowohl maschinell als auch von Hand erfolgen, vorzugsweise mit einer Presse wie vorstehend im Schritt (c1) beim Einsatz des erfindungsgemäßen Klebers als Lösungsmittel-Kleber beschrieben, wobei die Presse ein beheizbares und kühlbares Ober- und Unterwerkzeug 10, 11 aufweist. Gemäß einer bevorzugten Ausführungsform werden die beiden Bauteile unter Druck verpresst und langsam auf ca. 80 °C erwärmt. Sobald die Fügetemperatur erreicht ist, wird diese für ungefähr 5 Minuten gehalten, wobei der Schellack in dieser Phase eine pastöse Konsistenz aufweist.

Im Schritt (e2) lässt man die verbundenen Bauteile erkalten, wobei die Bauteile bis zum vollständigen Erkalten auf Raumtemperatur verpresst bleiben. Dazu wird die Wärmequelle nach dem Schritt (d2) entfernt, zum Beispiel durch Ausschalten der Heizplatte und gegebenenfalls durch zusätzliche Aktivierung einer Kühlung. Nach dem vollständigen Erkalten erhält man eine harte Verklebung, die vorteilhafterweise sofort belastbar ist.

Sollte eine Verklebung ohne elektrische Leitfähigkeit gewünscht sein, so können die beiden beschriebenen Verfahren zum Verkleben zweier Bauteile auch mit einem Kleber ohne zugesetzte Metallpartikel, d.h. einem Kleber, in dem nur Schellack in Ethanol gelöst ist, durchgeführt werden.

Desweiteren stellt die vorliegende Erfindung zwei alternative Verfahren zum Lösen der Verklebung zweier Bauteile, die durch eines der erfindungsgemäßes Verfahren zum Verkleben zweier Bauteile verklebt wurden, bereit.

Insbesondere wird ein Verfahren zum Lösen der Verklebung zweier Bauteile, die durch ein erfindungsgemäßes Verfahren verklebt wurden, bereitgestellt, umfassend die Schritte:
Erwärmen der verklebten Bauteile auf 60 bis 80 °C zur Aufweichung der Klebung;
Trennen der Bauteile; und
Reinigen der Bauteile mit Ethanol.

Im ersten Schritt des Verfahrens werden die verklebten Bauteile auf 60 bis 80 °C erwärmt. Die Art der Erwärmung unterliegt erfindungsgemäß keiner Einschränkung. Gemäß einer bevorzugten Ausführungsform erfolgt die Erwärmung mit Hilfe einer Heizplatte. Alternativ kann zum Erwärmen auch ein erwärmtes Ethanolbad verwendet werden. Durch besagte Erwärmung weicht der Kleber auf und wird teigig. Dadurch werden die verklebten Bauteile wieder trennbar und können im nachfolgenden Schritt mechanisch getrennt werden. Nach dem Trennen werden die Bauteile mit Ethanol gereinigt, vorzugsweise in mehreren Stufen, um sämtliche Schellackrückstände zu entfernen. Für den letzten Reinigungsschritt wird dabei vorzugsweise Ethanol in einer Reinheit von mindestens 99% eingesetzt. Falls die Empfindlichkeit der Bauteile dies zulässt, kann die Reinigung der Bauteile mit Ethanol auch mechanisch, z.B. mit Hilfe einer Bürste, unterstützt werden. Alternativ, und besonders bevorzugt beim Vorliegen von feinen Strukturen, kann die Reinigung in einem Ultraschallbad durchgeführt werden.

Gemäß einer alternativen Ausführungsform der vorliegenden Erfindung kann das Verfahren zum Lösen der Verklebung auch ohne Erwärmung durchgeführt werden. Gemäß dieser Ausführungsform umfasst das Verfahren die Schritte:
Aufweichen der Klebung mit Ethanol;
Trennen der Bauteile; und
Reinigen der Bauteile mit Ethanol.

Das letztgenannte Verfahren zum Lösen der Verklebung unterscheidet sich von dem vorherigen Verfahren ausschließlich in dem Schritt, in dem die Klebung aufgeweicht wird. Alternativ zum thermischen Aufweichen wird gemäß dieser Ausführungsform das Aufweichen der Klebung durch Ethanol bewirkt. Dies erfolgt zum Beispiel dadurch, dass die beiden verbundenen Bauteile in Ethanol getaucht werden. Dadurch löst sich der Kleber in Ethanol nach und nach auf, wodurch die beiden verbundenen Bauteile in den nächsten Schritten wie obenstehend beschrieben getrennt und mit Ethanol nachgereinigt werden können. Für den letzten Reinigungsschritt wird dabei vorzugsweise Ethanol in einer Reinheit von mindestens 99% eingesetzt. Gegenüber dem thermischen Verfahren zum Lösen der Verklebung kann sich bei dieser Ausführungsform der Nachteil ergeben, dass das Aufweichen, d.h. das Anlösen des gehärteten Klebers gegebenfalls deutlich länger dauert als beim thermischen Löseverfahren, da nur eine geringe Angriffsfläche, der Klebespalt, für das Lösungsmittel am Kleber besteht. Vorteilhafterweise kann diese Ausführungsform der vorliegenden Erfindung jedoch auch angewendet werden, wenn thermisch empfindlich Bauteile voneinander zu lösen sind.

Schließlich stellt die vorliegende Erfindung die Verwendung des erfindungsgemäßen Klebers zur reversiblen Verklebung zweier Bauteile bereit.

Aufgrund der erfindungsgemäßen Verfahren, welche den erfindungsgemäßen Kleber verwenden, können vorteilhafterweise Flachmaterialien mit einem Untergrund sehr gut haftend verbunden werden, ohne dass auf Epoxy basierende Leitkleber verwendet werden müssen. Durch die erfindungsgemäßen Verfahren zur Lösung der erfindungsgemäßen Klebung kann daher bei der Entfernung der Klebung im Gegensatz zu Epoxy-Leitklebern auf giftige Chemikalien vorteilhafterweise verzichtet werden, und der Kleber kann sehr einfach vollständig entfernt werden. Vorteilhafterweise ist die elektrische Leitfähigkeit des erfindungsgemäßen Klebers auf Basis von Schellack bei Verwendung von Silber-Flakes als Metallpartikel vergleichbar mit der des Standard-Leitklebers auf Epoxy/Silber-Basis (Volumenwiderstand zwischen 0,005 Ω·cm bis 0,05 Ω·cm), ohne dass jedoch dessen Nachteile bei der Entfernung auftreten. Zudem umfasst die vorliegende Erfindung jeweils ein Verfahren zur Verklebung und zum Lösen der Verklebung, das nicht thermisch, d.h. ohne Erwärmung, durchgeführt wird, so dass vorteilhafterweise der erfindungsgemäße Kleber auch bei Bauteilen verwendet werden kann, die wärmeempfindlich sind. Mögliche Anwendungsbereiche des erfindungsgemäßen Klebers und der erfindungsgemäßen Verfahren sind beispielsweise die Fixierung von Feinblechen für die MCM- oder Laserbearbeitung, Wasserstrahlschneiden und Ätzen sowie Fixieren von nichtmagnetischen Materialien als Alternative zu Magnetspannplatten.

### Die Figuren zeigen:

- Figur 1:: Schematischer Aufbau einer Presse für Schellack-Klebungen
- Figur 2:: Ausschnitt eines schematischen Aufbaus einer Presse für Schellack-Klebungen unter Verwendung von Spacern
- Figur 3:: Ausschnitt eines schematischen Aufbaus einer Presse für Schellack-Klebungen unter Verwendung von Mikro-Kugeln.

### Bezugszeichenliste

- 1: Isolator (thermisch)
- 2: Heiz-Kühlelement
- 3: Werkstück
- 4: Werkstückträger
- 5: Mikrometer
- 6: Anschlag
- 7: Spacer
- 8: Kleber
- 9: Mikro-Kugeln
- 10: Oberwerkzeug
- 11: Unterwerkzeug

## Patentansprüche

1. Ethanollöslicher, elektrisch leitender Kleber, umfassend Schellack, elektrisch leitende Metallpartikel und Ethanol.

2. Kleber nach Anspruch 1, wobei die elektrisch leitenden Metallpartikel Silber-Flakes sind.

3. Verfahren zur Herstellung eines ethanollöslichen, elektrisch leitenden Klebers nach Anspruch 1 oder 2, umfassend:
Lösen von Schellack in Ethanol; und
Hinzufügen der elektrisch leitenden Metallpartikel zur Bildung einer Suspension.

4. Verfahren zum Verkleben zweier Bauteile, umfassend die Schritte:
(a1) Auftragen eines Klebers nach Anspruch 1 oder 2 auf die zu verklebende Oberfläche mindestens eines Bauteils, wobei die Bauteile ein Flachmaterial und ein Untergrund sind;
(b1) Aufbringen des einen Bauteils auf das andere Bauteil, wobei die zu verklebenden Oberflächen der beiden Bauteile, von denen mindestens eine Oberfläche im Schritt (a1) mit Kleber versehen wurde, miteinander in Kontakt gebracht werden;
(c1) Verpressen der beiden Bauteile; und
(d1) Verdampfen des Ethanols unter dem bestehenden Druck.

5. Verfahren zum Verkleben zweier Bauteile, umfassend die Schritte:
(a2) Auftragen eines Klebers nach Anspruch 1 oder 2 auf die zu verklebende Oberfläche mindestens eines Bauteils, wobei die Bauteile ein Flachmaterial und ein Untergrund sind;
(b2) Erwärmen des Bauteils oder der Bauteile, auf das/die der Kleber aufgetragen ist, zum Verdampfen des Ethanols;
(c2) Aufbringen des einen Bauteils auf das andere Bauteil, wobei die zu verklebenden Oberflächen der Bauteile, von denen mindestens eine Oberfläche im Schritt (a2) mit Kleber versehen wurde, miteinander in Kontakt gebracht werden;
(d2) Verpressen und Erwärmen der beiden Bauteile; und
(e2) Erkalten lassen der verbundenen Bauteile unter dem bestehenden Druck.

6. Verfahren nach Anspruch 5, wobei der Kleber auf nur ein Bauteil im Schritt (a2) aufgetragen wird.

7. Verfahren nach Anspruch 5 oder 6, wobei zwischen Schritt (b2) und (c2) ein Schritt (b2') des Erkaltenlassens jedes Bauteils, das im Schritt (b2) erwärmt wurde, erfolgt.

8. Verfahren nach einem der Ansprüche 5 bis 7, wobei das Erwärmen des/der Bauteil(e) im Schritt (b2) mit einer Heizplatte oder einem Warmluftofen durchgeführt wird.

9. Verfahren nach einem der Ansprüche 5 bis 8, wobei das/die Bauteil(e) im Schritt (b2) bis 60 °C erwärmt werden.

10. Verfahren nach einem der Ansprüche 5 bis 9, wobei das Verpressen der beiden Bauteile im Schritt (d2) unter Druck bei 60 bis 80 °C erfolgt.

11. Verfahren nach einem der Ansprüche 4 bis 10, wobei der Kleber mit einer Heizdüse im Schritt (a1) beziehungsweise (a2) aufgetragen wird.

12. Verfahren nach einem der Ansprüche 4 bis 11, wobei das Flachmaterial ein Blech ist.

13. Verfahren zum Lösen der Verklebung zweier Bauteile, die durch ein Verfahren nach einem der Ansprüche 4 bis 12 verklebt wurden, umfassend die Schritte:
Erwärmen der verklebten Bauteile auf 60 bis 80 °C zur Aufweichung der Klebung;
Trennen der Bauteile; und
Reinigen der Bauteile mit Ethanol.

14. Verfahren zum Lösen der Verklebung zweier Bauteile, die durch ein Verfahren nach einem der Ansprüche 4 bis 12 verklebt wurden, umfassend die Schritte:
Aufweichen der Klebung mit Ethanol;
Trennen der Bauteile; und
Reinigen der Bauteile mit Ethanol.

15. Verwendung eines Klebers nach Anspruch 1 oder 2 zur reversiblen Verklebung zweier Bauteile.
